Europäisches Patentamt

European Patent Office

Office européen des brevets

(11) Publication number: **0 351 047**
**A2**

## EUROPEAN PATENT APPLICATION

(21) Application number: **89305561.6**

(22) Date of filing: **02.06.89**

(51) Int. Cl.⁴: **C09J 123/08 , C08K 5/14**

(30) Priority: **14.07.88 GB 8816824**
**07.02.89 GB 8902698**
**15.03.89 GB 8905930**

(43) Date of publication of application:
**17.01.90 Bulletin 90/03**

(84) Designated Contracting States:
**BE DE FR GB NL**

(71) Applicant: **BOWTHORPE-HELLERMANN LIMITED**
**Gatwick Road**
**Crawley West Sussex RH10 2RZ(GB)**

(72) Inventor: **Mathias, Timothy James**
**8 Jennys Combe Close Coombe Dean**
**Plymstock Devon(GB)**
Inventor: **Cole, Edward**
**17 Saint Bridget Avenue Crown Hill**
**Plymouth Devon(GB)**

(74) Representative: **Austin, Hedley William et al**
**Urquhart-Dykes & Lord Alexandra House 1**
**Alexandra Road**
**Swansea West Glamorgan SA1 5ED(GB)**

(54) **Thermally curable adhesives and method of bonding.**

(57) The adhesive, which is curable at 120° to 160°C and is a hot melt in this range until cured, comprises an ethylene-vinyl ester copolymer (such as EVA) and a free-radical cross-linking agent (such as a peroxide) in an amount of 8 to 20% by weight, based on the weight of the copolymer. The adhsive preferably contains finely divided silver in an amount of 50 to 80% by weight of the composition. One of the surfaces to be bonded is coated with the composition, the coated surface is contacted with the other of the surfaces to be bonded, and the composition is heated to a temperature of 120 to 160°C so as to initially melt and then fully cure the composition.

EP 0 351 047 A2

## Thermally Curable Adhesives and Method of Bonding

The present invention is concerned with thermally curable adhesives, and a method of adhesively bonding using such adhesives.

In order to obtain adhesives with high temperature strength and good resistance to solvent attack, a high degree of cross-linking is required. Up to now the most commonly available such adhesive is a two component epoxy resin.

This type of adhesive requires the two components to be mixed and applied in situ, which is, of course, time consuming and difficult. There is therefore a need for pre-mixed one component adhesives. Known one component adhesives are generally uncurable (with consequent inferior high temperature and solvent resistance) or require curing at high temperatures, e.g. in excess of 160°C. Such curable one component adhesives are typically thermally-activated hindered epoxy resins.

U.S. Patent 3617419 discloses an adhesive comprising an ethylene-vinyl acetate copolymer (EVA), an organic solvent, and an organic peroxide cross-linking agent. The patent teaches that the cross-linking agent should be present in small amounts, such as 0.25 to 5.0%, based on the weight of resin; a preferred amount is 0.75 to 2.0% on the same basis.

We have now found that if a substantially greater quantity of peroxide is used, and a critical range of curing temperatures is employed, then considerably enhanced adhesion shear values may be obtained.

According to the present invention, there is provided a thermally curable adhesive composition for bonding a material either to itself or to another material, which composition is curable at a temperature in the range 120 to 160°C and functions as a hot melt adhesive at said temperature until cured, the composition comprising an ethylene-vinyl ester copolymer and a free-radical cross-linking agent therefor, the latter being present in an amount of 8 to 20% by weight, based on the weight of the copolymer.

Not only do the properties of the adhesive composition according to the invention surpass those of the compositions described in the above-mentioned U.S. patent, but they are curable at lower temperatures (namely 120 to 160°C, compared with the preferred range of 177 to 204°C disclosed in the U.S. patent).

The compositions according to the invention can be cured using a hot air gun or infra-red radiator; in some embodiments (when the composition contains an electrically conductive filler as will be described in more detail below) the compsition may be cured by electrical heating). Until cure has taken place, the adhesive composition according to the invention functions as a typical hot melt, which therefore facilitates the accurate alignment of assembled artefacts whilst they are held in position by the viscous molten adhesive.

The cross-linking agent present in the adhesive composition according to the invention is typically a peroxide or azo compound, which may be employed in an amount of 2-20% (such as about 8-12%), based on the weight of the copolymer. Typical peroxides are t-butyl perbenzoate, dicumyl peroxide, and benzoyl peroxide. A typical azo compound is azo-bis-isobutyronitrile.

The ethylene-vinyl ester copolymer is preferably EVA, although other ethylene-vinyl ester copolymers (such as ethylene-vinyl butyrate copolymers) may be employed, if wished. The copolymer typically contains 30 to 85% (such as 60 to 80%) by weight of ethylene, substantially all the remainder being constituted by units of the vinyl ester; minor amounts of non-deleterious comonomers may also be incorporated in certain circumstances. Examples of such comonomers include triallyl cyanurate, diethylene glycol dimethacrylate, and trimethylol propane trimethacrylate or triacrylate.

The adhesive according to the invention may further contain finely divided silver in an amount of 50 to 80% by weight of the composition; by this means the compsition can advantageously be rendered electrically conductive.

The finely divided silver, which is preferably present in an amount of 60 to 75% by weight of such a composition, may be in the form of flakes or powder. It is preferred that the particle size thereof should be less than 100 mesh (such as less than 400 to 100 mesh). Depending on the amount of silver present, the composition according to the invention may have a volume resistivity of 0.00005 to 0.02 ohm per centimetre, such as about 0.0001 ohm per centimetre.

The adhesive composition according to the invention is typically made up in a hot solvent, such as trichloroethylene, at 40-80°C. In this solution form, the adhesive can be applied mechanically or manually to surfaces to be bonded together. After removal of the solvent by drying the coated surfaces are ready to be bonded together.

Tapes, films or the like may be cast from a solution of the adhesive composition according to the invention. The adhesive composition can, in another embodiment, be extruded from the molten phase, in the form of a tape, film or the like.

2

The present invention further comprises a method of adhesively bonding a first artefact having a surface of a first material (such as a plastics material, or metal) to a second artefact with a surface of the same material, or of a different material (such as different plastics or metal). The method comprises coating at least one of the surfaces to be bonded with a composition according to the invention, placing the coated surface in contact with the other of the surfaces to be bonded, and heating the composition to a temperature of 120 to 160°C so as to initially melt the composition and then substantially fully cure the composition.

The composition according to the invention may be applied in the form of a preformed tape, film or extruded body; alternatively, it may be applied in the form of a solution in an organic solvent, the latter being removed prior to placing the coated surface into contact with the other surface.

In one embodiment, it is particularly preferred that the method according to the invention be used for bonding of thermally shrinkable components (such as joints, terminations or harnesses) to cables. Of course, the method according to the invention may be used for other similar applications where adhesive performance at elevated temperatures is desired. The above-mentioned thermally shrinkable component, which may be in the form of an extruded tube or moulded body, is typically such that it is thermally shrinkable in the range 120 to 160°C.

The present invention further comprises a thermally shrunk component which is bonded to an electrical cable by means of an adhesive composition according to the invention.

The following adhesive formulations according to the invention are given by way of illustration only. All percentages quoted are by weight.

| Formulation A | | |
|---|---|---|
| Ingredient | Supplier | Approx % |
| Ethylene/vinyl acetate copolymer | Exxon/Atochem | 65 |
| t-Butyl Perbenzoate | Interox | 9 |
| ATM12 (trimethylol propane triacrylate) | Ancomer | 5 |
| Staboxal PCD (stabilizer) | Bayer U.K. | 5 |
| SP553 (tackifier) | Schenectady | 14 |
| Winnofil "SP" (filler) | I.C.I. | 2 |

| Formulation B | | |
|---|---|---|
| Ingredient | Supplier | Approx % |
| Ethylene/vinyl acetate copolymer | Exxon/Atochem | 66 |
| Azo-bis-iso-butyronitrile | Akzo Chemie | 6 |
| ATM6 (diethylene glycol dimethacrylate) | Ancomer | 10 |
| SP553 (tackifier) | Schenectady | 16 |
| Britomya M (filler) | Croxton & Gary | 2 |

| Formulation C | |
|---|---|
| Ethylene/vinyl acetate copolymer | 19.6g |
| Benzoyl peroxide | 3.1g |
| Diallyl phthalate | 3.5g |
| Phenolic resin (tackifier) | 3.1g |
| Calcium carbonate (filler) | 0.6g |
| Butyrated hydroxy-toluene (antioxidant) | 0.1g |
| Silver powder | 70.0g |
| Total | 100g |

Formulation C had when cured a resistivity of 0.0001 ohm per cm.

Each of Formulations A to C was used to bond polyethylene heat-shrink boots to cylindrical aluminium mandrels, by the following method. The respective formulation was dissolved as a 40% solution in trichloroethylene, and then applied at 65°C to the internal surface of a boot by means of a paintbrush.

The solvent was allowed to dry at 23°C for 24 hours. The boot was then thermally shrunk onto an etched aluminium mandrel, and mechanical abrasion equipment used to ensure optimum adhesion of the internal surface of the respective boot. (For Formulation C, the heating to cause shrinking was applied electrically.)

The samples were then tested according to V.G.95-343 Part 18 as follows. With the boot (via an adapter) and the aluminium mandrel clamped, the sample was sheared at a rate of 50mm per minute until failure. The peak force is noted as the dynamic shear strength; the test is performed at various temperatures after conditioning for one hour at that temperature.

For the solvent resistance tests, the samples were immersed in the test solvent at the temperature specified for 24 hours and then allowed to dry for a further 24 Hours before subjected to dynamic shear testing as above at the appropriate temperature (the aviation fuel and hydraulic fuel were at 50°C, the lubricating oil at 70°C and the solvent at 23°C).

The peel tests were carried out after similar sample preparation with drum peel between the heat shrink boot and the aluminium mandrel or a V.G. approved cable; the cross-head displacement was 50mm per minute.

The results obtained were as follows:

| Polyethylene/aluminium shear strength at 23°C | = | 1315N |
|---|---|---|
| 100°C | = | 249N |
| 150°C | = | 41N |
| Polyethylene/aluminium shear strength after immersion in:- | | |
| aviation fuel | = | 961N |
| hydraulic fluid | = | 1308N |
| lubricating oil | = | 1307N |
| iso-propanol | = | 1328N |
| 1,1,1 trichloroethane | = | 1148N |
| methyl ethyl ketone | = | 946N |
| water | = | 1177N |
| Drum peel strength polyethylene/aluminium | = | 153N/25mm |
| (Part 14) polyethylene/polyethylene | = | 127N/25mm |

## Claims

1. A thermally curable adhesive composition for bonding a material either to itself or to another material, which composition is curable at a temperature in the range 120 to 160°C and functions as a hot melt adhesive at said temperature until cured, said composition comprising an ethylene-vinyl ester copolymer and a free-radical cross-linking agent therefor in an amount of 8 to 20% by weight, based on the weight of said copolymer.

2. A composition according to claim 1, wherein said vinyl ester is vinyl acetate and/or said copolymer comprises 30 to 85% by weight of ethylene.

3. A composition according to claim 1 or 2, in which said cross-linking agent is present in an amount of 6 to 10% by weight, based on the weight of the entire composition (excluding fillers and solvents, if present).

4. A composition according to any of claims 1 to 3, in which said cross-linking agent is a peroxide.

5. A composition according to any of claims 1 to 4, which is in solution in an organic solvent or in the form of an extruded body.

6. A composition according to any of claims 1 to 5, which contains finely divided silver in an amount of 50 to 80% by weight of the composition, prefeably having a particle size of less than 100 mesh.

7. A method of adhesively bonding a first artefact having a surface of a first material to a second artefact having a surface either of said first material or of a second material, which comprises coating at least one of the surfaces to be bonded with a composition according to any of claims 1 to 5, placing said coated surface in contact with the other of the surfaces to be bonded, and heating said composition to a temperature of 120 to 160°C so as to initially melt said composition and then substantially fully cure said composition.

8. A method according to claim 7, in which said composition is applied in the form of a solution in an organic solvent, the latter being removed prior to placing said coated surface into contact with the other of said surfaces.

9. A method according to claim 7 or 8, in which said first artefact is a thermally shrinkable component and said second artefact is an electrical cable.

10. A heat shrink component which is bonded to an electrical cable by means of an adhesive according to any of claims 1 to 6.